# EUROPEAN PATENT APPLICATION

(11) **EP 2 028 528 A1**
(43) Date of publication of application: **25.02.2009**
(21) Application number: 07024694.7
(22) Date of filing: 20.12.2007
(51) Int. Cl.: G02C 7/04

(54) **Multifocal contact lenses and methods for improving vision and for producing multifocal contact lenses**

(30) Priority: 30.07.2007 US 830520
(71) Applicant: CooperVision International Holding Company, LP, St Michael (BB)
(72) Inventor: Shone, Thomas R., Fairport, NY 14450 (US); Iravani, Nikoo, Lake Forest, CA 92630 (US); Donahue, Leslie, Sherbrooke, Quebec J1N 3H5 (CA)
(74) Representative: Critten, Matthew Peter

(57) **Abstract**

Pairs of multifocal contact lenses are described. Each contact lens of the pair includes a central area that provides substantially all of the distance vision correction of the lens, and an annular area surrounding the central area and providing intermediate vision correction and near vision correction. A pair of contact lenses can be used to correct a person's vision, especially presbyopia of an emerging presbyopic patient. Methods of producing the present pairs of contact lenses are also described.

## Description

### CROSS-REFERENCE TO RELATED APPLICATIONS

This application claims priority to US Application No. 11/830,520, filed July 30, 2007, the entire contents of which are hereby incorporated by reference.

### FIELD

The present invention relates to multifocal contact lenses and methods of using and making the contact lenses.

### BACKGROUND

Presbyopia is a condition in which a person loses the ability over time or has a decreased ability to focus clearly on nearby objects. It is believed that presbyopia may be caused, at least in part, by a decreased accommodation of the lens in the patient's eye. Presbyopia is most frequently diagnosed in people who are about forty years old or older. An emerging presbyope can be understood to be a person who is beginning to show symptoms of presbyopia, for example, a person who exhibits good accommodation but who can't clearly focus on near objects.

Contact lenses have been described as being useful in correcting presbyopia. For example, in a mono-vision correction system, a presbyopic person wears one contact lens for distance vision in one eye, and a second contact lens for near vision in the other eye. Multifocal contact lenses have also been described as being useful for correcting presbyopia. Some multifocal lens systems consist of two multifocal contact lenses with each lens including alternating concentric rings of different powers. In some multifocal contact lens systems, the first contact lens has a central distance vision zone and the second contact lens has a central near vision zone. The central zones are surrounded by one or more rings having different optic powers. In other multifocal contact lens systems, both contact lenses have central distance vision zones and have multiple rings of different optic powers surrounding the central distance vision zone, and the number of rings surrounding the central distance vision zone differ between the two lenses depending on whether the lens is for the dominant eye or non-dominant eye.

### SUMMARY

Multifocal contact lenses, methods of improving or correcting vision, and methods for producing the multifocal contact lenses are described. The present pairs of multifocal contact lenses are useful in correcting or improving vision of patients who require a power correction of +1.25 diopters or less. For example, the present contact lenses are useful in correcting vision of an emerging presbyopic patient, which can be understood to be a person who is beginning to show symptoms of presbyopia and who requires no greater than about + 1.25 diopters of add power.

In one aspect, pairs of multifocal contact lenses are provided. The present pairs of multifocal contact lenses consist of two multifocal contact lenses. Each lens of the pair has an optic axis. In addition, each contact lens of the pair includes a central area that includes the optic axis. The central area provides substantially all of the distance optical power of the multifocal contact lens. Each contact lens of the pair also includes an annular area surrounding the central area. The annular area extends radially outwardly from the central area toward a lens edge. The annular area provides intermediate optical power and near optical power. A multifocal contact lens system, as referred to herein, includes the pair of multifocal contact lenses.

In another aspect, methods of correcting or improving vision are provided. The present methods include a step of providing the present pairs of multifocal contact lenses described herein. The providing can be performed by a contact lens manufacturer to a distributor or lens wearer, a contact lens distributor to a doctor or a lens wearer, or by a doctor to a lens wearer.

In another aspect, methods of producing contact lenses are provided. The present methods include a step of forming the present pairs of multifocal contact lenses described herein.

Aspects of the present invention are also described by the appended claims.

Various embodiments of the present invention are described in detail in the detailed description and additional disclosure below. Any feature or combination of features described herein are included within the scope of the present invention provided that the features included in any such combination are not mutually inconsistent as will be apparent from the context, this specification, and the knowledge of one of ordinary skill in the art. In addition, any feature or combination of features may be specifically excluded from any embodiment of the present invention. Additional advantages and aspects of the present invention are apparent in the following detailed description, drawings, and additional disclosure.

### BRIEF DESCRIPTION OF THE DRAWINGS

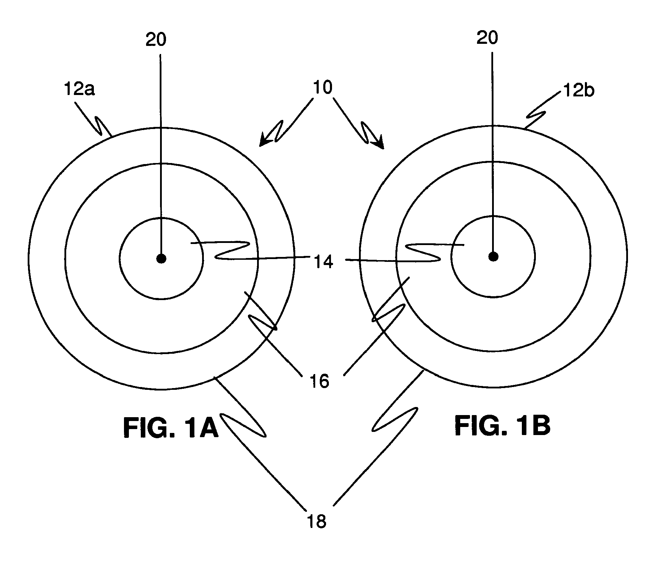

FIGS. 1A and 1B illustrate plan views of a pair of contact lenses as described herein.

### DETAILED DESCRIPTION

Multifocal contact lenses, methods of improving or correcting vision, and methods for producing the multifocal contact lenses are described. Although the present lenses and methods will be focused on the use of the lenses in correcting vision of an emerging presbyopic patient, the present lenses and methods can be useful in correcting vision of other patients who require a power correction of +1.25 diopters or less.

A person is typically diagnosed with presbyopia by a skilled professional using conventional eye examination techniques that, among other things, are used to evaluate accommodation of the person's eyes. However, some early signs of presbyopia may be apparent to the patient without the eye exams, such as the decreasing ability to focus on near objects while still being able to focus on distant objects. An emerging presbyope, as used herein, is a person who is beginning to show symptoms of presbyopia and who requires no greater than about + 1.25 diopters of add power. Compared to previous methods of correcting presbyopia in presbyopic patients, such as correcting vision of patients that require greater than +1.25 diopters of add power, that utilize two contact lenses of different designs, it has now been discovered that presbyopic people who require about +1.25 diopters of add power or less exhibit improvement in their vision using two multifocal contact lenses of substantially similar, and preferably identical, design. One benefit of using two contact lenses of substantially similar design is that the patient does not need to be concerned whether the correct lens is placed on the dominant eye (i.e., the eye that is predominant for distance vision) or the other non-dominant or dominated eye. In addition, an eye care practitioner is now able to provide vision correction to a patient, such as an emerging presbyope, independent of determining eye dominance.

In one aspect of the present invention, pairs of multifocal contact lenses are provided. The pair of multifocal contact lenses consists of a first contact lens and a second contact lens. Each contact lens of the lens pair has an optic axis that is typically at the center of the lens. Each contact lens has an anterior surface or front surface and an opposing posterior surface or back surface that is placed in contact with a person's eye. A peripheral edge surface defines the perimeter of each contact lens.

Each multifocal contact lens of the lens pair comprises a central area that includes the optic axis of the contact lens. The central area provides substantially all of the distance optical power of the multifocal contact lens. Distance optical power refers to the amount of refractive power required to correct a lens wearer's distance vision acuity by a desired amount. Each multifocal contact lens of the lens pair also comprises an annular area surrounding the central area. The annular area extends radially outwardly from the central area toward a lens edge of the multifocal contact lens. In certain embodiments, including the illustrated embodiments described herein, the annular area has an outer border that is located radially outward from the central area and that is located radially inward from the lens edge. For example, the annular area may be surrounded by a non-optic zone. However, in other embodiments, the annular area may extend to the lens edge. The annular area provides both intermediate optical power and near optical power. Near optical power refers to the amount of refractive power required to correct the lens wearer's near vision acuity by a desired amount. Intermediate optical power refers to the power between that of the near optical power and distance optical power. For example, intermediate optical power can be the power required to clearly view objects located at a distance from about 46 centimeters to about 80 centimeters from the eye.

An embodiment of a pair of multifocal contact lenses is illustrated by the contact lens of FIG. 1A and the contact lens of FIG. 1B. A pair of multifocal contact lenses 10 consists of a first contact lens 12a and a second contact lens 12b. Each multifocal contact lens 12a and 12b includes a central area 14 that includes the optic axis 20 of the contact lens. The central area 14 of each contact lens 12a and 12b provides substantially all of the distance optical power of the multifocal contact lens. Each contact lens 12a and 12b also includes an annular area 16 surrounding the central area 14. The annular area 16 extends radially outwardly from the central area 14 toward the lens edge 18. The annular area 16 of each contact lens 12a and 12b provides intermediate optical power and near optical power. A non-optic zone (e.g., an area that is not used to correct a person's vision) is provided between the outer perimeter of annular area 16 and the lens edge 18. In addition, it can be appreciated from FIGS. 1A and 1B, that the annular area 16 can be represented as having an inner border proximate an outer border of the central area, and having an outer border spaced radially outward therefrom.

In certain embodiments, including the illustrated embodiment, the central area of each contact lens has a spherical surface, and the annular area of each lens has an aspherical surface. The spherical surface of the central area can provide a single dioptric power, and the aspherical surface can provide a transition of optical powers to provide a gradual correction of intermediate and near vision. The transition provided by the aspherical surface can be achieved by gradually decreasing the radii in the annular area from a region adjacent the perimeter of the central area to the outer edge of the annular area. It can be appreciated that because the radius of curvature at the inner perimeter of the annular area is almost equal to the radius of curvature of the central area, a sharp transition between the central area and the annular area may not be noticeable. In addition, because of the change in curvature in the annular area, it can be understood that the annular area is a progressive aspheric region of the lens.

Although the illustrated embodiment of the present contact lens pairs includes only one annular area on each contact lens, other embodiments of the lens pairs may consist of two contact lenses, wherein each contact lens comprises a second annular area circumscribing the first annular area, the second annular area providing only a near optical power. The second annular area can be defined by a spherical surface.

The present pairs of multifocal contact lenses are effective in correcting presbyopia or improving vision of an emerging presbyope. That is, the present pairs of contact lenses improve the vision of a person who requires an add power of +1.25 diopters or less. Thus, in certain embodiments of the present lens pairs, each contact lens of the lens pair includes a central area that includes an add power no greater than +1.25 diopters. In some embodiments, the central area of each lens includes an add power from about +0.25 diopters to about +1.25 diopters.

In some embodiments, each of the present contact lenses is made overrefractive relative to a person's prescription. For example, the present lenses may have a refractive power that is 0.25 diopters greater than a power prescribed for the patient. This additional refractive power can help improve the vision of the patient for distant objects, near objects, or both.

In addition, each of the multifocal contact lenses of the present lens pairs may provide a sphere power from about +4.00 diopters to about -6.00 diopters. For example, each lens may have a single sphere power between +4.00 diopters and -6.00 diopters. Typically, the sphere power will be a value from +4.00 diopters to -6.00 diopters in 0.25 diopter increments.

Although the dimensions of the vision correcting areas can vary, in some embodiments, including the illustrated embodiment, the annular area of each lens of the lens pair has a diameter of about 8.5 mm. For example, the linear distance between the outer border of the annular area on opposite sides of the optic axis of the lens is about 8.5 mm. In such embodiments, the central area of each lens of the lens pair can have a diameter from about 1.7 mm to about 3.0 mm. It can be appreciated that due to the smooth transition from the central area to the annular area, as described herein, a specific delineation of the central area diameter may not be particularly evident. However, in more specific embodiments, the central area may have a diameter of about 2.3 mm.

The vision correcting areas, such as the central area and annular area described herein, can be provided on either the anterior surface of the lens, the posterior surface of the lens, or combinations thereof. In the illustrated embodiment, the central area and annular area are provided on the anterior surface of the lens. In that manner, the posterior surface can be configured to have a single base curve, or can otherwise be shaped to fit comfortably on a patient's eye.

The present contact lenses of the contact lens pair can be lathed contact lenses, spincast contact lenses, or cast molded contact lenses. It can be appreciated that these types of contact lenses can have different physical features resulting from their method of manufacture. In certain embodiments, including the illustrated embodiment, each of the contact lenses of the lens pair is a cast molded contact lens. In other words, it is a contact lens obtained from a contact lens mold assembly formed from two contact lens mold sections in contact with each other to form a contact lens shaped cavity.

The present contact lenses can be daily wear lenses or extended wear lenses. In certain embodiments, each contact lens of the lens pair is a daily disposable contact lens (i.e., a contact lens that is worn on a person's eye only once and then discarded). In comparison, as understood by persons of ordinary skill in the art, a daily wear lens is a lens that is worn on a person's eye, and is then cleaned and is worn on the person's eye for at least one additional time. It can be appreciated that daily disposable contact lenses are physically different, chemically different, or both compared to daily wear and extended wear contact lenses. For example, formulations used to make daily wear or extended wear contact lenses are different than formulations used to make daily disposable contact lenses due to the economic and commercial factors in making substantially larger volumes of daily disposable contact lenses.

The present contact lenses can be made from a variety of polymerizable lens forming formulations. In certain embodiments, each lens of the contact lens pair is a hydrogel contact lens, as understood by persons of ordinary skill in the art. In some embodiments, each lens of the contact lens pair is a silicone hydrogel contact lens. Many hydrogel contact lenses are based on polymerizable lens formulations that include hydroxyethyl methacrylate (HEMA) monomers. Many silicone hydrogel contact lenses are based on polymerizable lens formulations that include siloxane monomers, oligomers, or macromers. Some examples of hydrogel contact lens materials include materials having the following US Adopted Names (USANs): etafilcon A, nelfilcon A, ocufilcon A, ocufilcon B, ocufilcon C, ocufilcon D, and omafilcon A. In addition, some embodiments of the present contact lenses may be hydrogel contact lenses that are based on lens formulations that contain 2,3-dihydroxypropyl methacrylate (GMA) alone or in combination with HEMA. Some examples of silicone hydrogel contact lens materials include materials having the following USANs: acquafilcon A, balafilcon A, comfilcon A, enfilcon A, galyfilcon A, lenefilcon A, lotrafilcon A, lotrafilcon B, and senofilcon A.

In some embodiments, each contact lens of the lens pair comprises the reaction product of a polymerizable composition comprising hydroxyethyl methacrylate (HEMA), 2-methacryloyloxyethyl phosphorylcholine, a crosslinker, and an initiator. Further embodiments may include an ultraviolet blocking agent, a tinting agent, or both.

In more detail, an embodiment of the present contact lens pairs consists of two multifocal contact lenses. Each multifocal contact lens is a cast molded contact lens. Each contact lens includes a vision correction portion that consists of a central area having a spherical surface and providing distance vision correction, and one annular area surrounding the central area, the one annular area having an aspherical surface and providing intermediate and near vision, where the near vision is provided by the more radially outward portion of the annular area.

A further embodiment of the present contact lens pairs consists of two multifocal contact lenses. Each multifocal contact lens is a cast molded contact lens that is the reaction product of an omafilcon A lens formulation containing an ethyleneglycol dimethacrylate (EGDMA) crosslinker, an 2,2'-azobisisobutyronitrile (AIBN) initiator, and Reactive Blue 4 tinting agent. Each contact lens includes a vision correction portion that consists of a central area having a spherical surface and providing distance vision correction, and one annular area surrounding the central area, the one annular area having an aspherical surface and providing intermediate and near vision, where the near vision is provided by the more radially outward portion of the annular area. The diameter of the annular area is 8.5 mm and the lens diameter is 14.4 mm and the lens has a base curve of 8.7 mm. The lenses are provided with any sphere power from +4.00 diopters to -6.00 diopters in 0.25 diopter increments. These lenses have a water content of about 60%. These lenses are daily wear lenses that are disposed of every two weeks.

A further embodiment of the present contact lens pairs consists of two multifocal contact lenses. Each multifocal contact lens is a cast molded contact lens that is the reaction product of an omafilcon A lens formulation containing an ethyleneglycol dimethacrylate (EGDMA) crosslinker, a bis(4-tertiarybutylcyclohexyl)-peroxydicarbonate (Perkadox) initiator , and Vat Blue 6 tinting agent. Each contact lens includes a vision correction portion that consists of a central area having a spherical surface and providing distance vision correction, and one annular area surrounding the central area, the one annular area having an aspherical surface and providing intermediate and near vision, where the near vision is provided by the more radially outward portion of the annular area. These lenses are daily disposable contact lenses that are disposed of after a single use, that is after being worn for a time period less than 24 hours, such as from about 6 hours to about 16 hours.

The present lenses can also include toric surfaces, rotational stabilization structures, or combinations thereof on one or both of the lenses of the lens pairs, especially when the patient has an astigmatism in one or both eyes. Examples of rotational stabilization structures that can be provided on the present lenses include ballasts, prism ballasts, thickened zones, thinned zones, protuberances on a lens surface, or combinations thereof.

In another aspect, methods of correcting vision of a person requiring vision correction of +1.25 diopters or less are provided.

For example, in certain embodiments, the present contact lens pairs are useful in correcting vision of an emerging presbyope, as described herein. The methods include a step of providing a pair of multifocal contact lenses. The pair of multifocal contact lenses can be any of the pairs described herein. For example, each lens of the pair includes a central area that includes the optic axis of the lens and provides substantially all of the distance optical power of the multifocal contact lens. Each lens also includes an annular area surrounding the central area. The annular area extends radially outwardly from the central area toward the lens edge. The annular area provides intermediate optical power and near optical power.

As additional non-limiting examples of the present lenses useful in the present methods, some embodiments of the methods may include providing pairs of contact lenses, wherein the central area of each lens has a spherical surface, and the annular area of each lens has an aspherical surface. Additional or alternative embodiments may provide a pair of contact lenses, wherein each lens of the pair includes only one annular area providing the intermediate optical power and near optical power. In further embodiments, the central area of each lens includes an add power from +0.25 diopters to about +1.25 diopters.

The present lenses are placed on a patient's eye such that the posterior surface of the lens contacts the corneal epithelium of the eye of the patient. With the present lens pairs, it is possible to correct presbyopia of an emerging presbyope without a need to compensate for the patient's add power, without the need to determine eye dominance, or both. The present lenses can provide enhanced binocular visual acuity at far, intermediate, and near distances compared to monovision systems.

It has been observed that with the present lenses and methods, an emerging presbyope's vision can be improved so long as the add power provided by the multifocal contact lenses is not greater than 1.25 diopters. Once the add power requirements of the person are greater than 1.25 diopters, the present lenses do not provide the desired vision correction, and instead, such patients requiring more than 1.25 diopters of add power show better vision correction using two different multifocal contact lenses, such as a lens pair consisting of a first lens having a distance central area surrounded by an aspheric annular area, and a second lens having a near central area surrounded by an aspheric annular area. Thus, with the present lenses and methods, patients up to the age of forty five years old who are showing early stage loss of accommodation can exhibit desirable vision correction.

Although the present pairs of lenses provide benefits in correcting vision of emerging presbyopic patients, the present lenses can also be useful in correcting or improving the vision of other types of patients. For example, the present pairs of contact lenses can be useful in correcting vision of patients, including patients younger than 40 years old, who require less than +1.25 diopters of near vision correction. The present lenses can provide the desired near vision correction without interfering with distance vision.

Another aspect relates to methods of producing the present contact lenses.

For example, a method of producing contact lenses for correcting vision of a person requiring vision correction of +1.25 diopters or less includes a step of forming a pair of multifocal contact lenses. The pair of multifocal contact lenses can be any of the pairs described herein. For example, each lens of the pair includes a central area that includes the optic axis of the lens and provides substantially all of the distance optical power of the multifocal contact lens. Each lens also includes an annular area surrounding the central area. The annular area extends radially outwardly from the central area toward the lens edge. The annular area provides intermediate optical power and near optical power.

As additional non-limiting examples of the present lenses that can be produced using the present methods, some embodiments of the methods may include forming pairs of contact lenses, wherein the central area of each lens has a spherical surface, and the annular area of each lens has an aspherical surface. Additional or alternative embodiments may form a pair of contact lenses, wherein each lens of the pair includes only one annular area providing the intermediate optical power and near optical power. In further embodiments, the central area of each lens includes an add power from +0.25 diopters to about +1.25 diopters.

As discussed herein, the forming step can be achieved by a variety of methods. In some embodiments, the forming includes a step of cast molding each lens of the pair of contact lenses. For example, a cast molding method may include providing a female mold section having a concave front curve lens-forming surface, dispensing a polymerizable lens formulation on the concave surface, placing a male mold section having a convex back curve lens-forming surface in contact with the formulation and the female mold section to form a contact lens mold assembly having a contact lens shaped cavity with the formulation provided therein. The contact lens mold assembly can be placed in a heated oven to cause the polymerizable lens formulation to polymerize and form a polymerized contact lens product. Alternatively, the contact lens mold assembly and formulation located therein can be exposed to other types of polymerizing amounts of radiation, such as ultraviolet radiation and the like.

After curing the lens formulation, the contact lens mold assembly can then be demolded to separate the two mold sections in which the polymerized contact lens remains attached to only one of the mold sections. The polymerized contact lens product can be delensed from the mold section and further treated, such as by extracting extractable materials from the lens, hydrating the lens, inspecting the lens, packaging the lens, and sterilizing the lens.

In certain embodiments of the present methods, a molding insert can be machined to include a central spherical surface and an annular aspherical surface. The molding insert is used in an injection molding machine to form an injection molded contact lens mold section from a plastic material, such as polypropylene, polystyrene, and the like, which can then be used in the cast molding process to produce the present contact lenses.

Although the disclosure herein refers to certain specific embodiments, it is to be understood that these embodiments are presented by way of example and not by way of limitation. The intent of the foregoing detailed description, although discussing exemplary embodiments, is to be construed to cover all modifications, alternatives, and equivalents of the embodiments as may fall within the spirit and scope of the invention as defined by the claims.

## Claims

1. A pair of daily disposable multifocal contact lenses, each lens of the pair having an optic axis and comprising:
a central area including the optic axis of the daily disposable contact lens and providing substantially all of the distance optical power of the daily disposable multifocal contact lens; and
an annular area surrounding the central area and extending radially outwardly from the central area toward a lens edge of the daily disposable multifocal contact lens, the annular area providing intermediate optical power and near optical power.

2. A pair of silicone hydrogel multifocal contact lenses, each lens of the pair having an optic axis and comprising:
a central area including the optic axis of the silicone hydrogel contact lens and providing substantially all of the distance optical power of the silicone hydrogel multifocal contact lens; and
an annular area surrounding the central area and extending radially outwardly from the central area toward a lens edge of the silicone hydrogel multifocal contact lens, the annular area providing intermediate optical power and near optical power.

3. The pair of multifocal contact lenses of claim 1 or claim 2, wherein the central area of each lens has a spherical surface, and the annular area of each lens has an aspherical surface.

4. The pair of multifocal contact lenses of any preceding claim, wherein each lens of the pair comprises only one annular area providing the intermediate optical power and near optical power.

5. The pair of multifocal contact lenses of any preceding claim, wherein the central area includes an add power from about + 0.25 diopters to about + 1.25 diopters.

6. The pair of multifocal contact lenses of any preceding claim, wherein each lens of the pair is a cast molded contact lens.

7. The pair of multifocal contact lenses of claim 1, wherein each lens of the pair comprises the polymerized reaction product of a polymerizable composition comprising hydroxyethyl methacrylate, 2-methacryloyloxyethyl phosphorylcholine, a crosslinker, and an initiator.

8. The pair of multifocal contact lenses of claim 1, wherein each lens of the pair is a silicone hydrogel contact lens.

9. The pair of multifocal contact lenses of any preceding claim, wherein each lens of the pair has a sphere power from +4.00 diopters to -6.00 diopters.

10. The pair of multifocal contact lenses of any preceding claim, wherein the annular area of each lens of the pair has a diameter of about 8.5 mm.

11. The pair of multifocal contact lenses of claim 10, wherein the central area of each lens of the pair has a diameter from about 1.7 mm to about 3.0 mm.

12. The pair of multifocal contact lenses of claim 11, wherein the central area of each lens of the pair has a diameter of about 2.3 mm.

13. The pair of multifocal contact lenses of any preceding claim which is effective in correcting the vision of an emerging presbyopic patient.

14. Use of a pair of daily disposable multifocal contact lenses or a pair of silicone hydrogel multifocal contact lenses to correct vision of a person requiring vision correction of +1.25 diopters or less, each lens of the pair of multifocal contact lenses comprising a central area including the optic axis of the contact lens and providing substantially all of the distance optical power of the multifocal contact lens; and an annular area surrounding the central area and extending radially outwardly from the central area toward a lens edge of the multifocal contact lens, the annular area providing intermediate optical power and near optical power.

15. The use of claim 14, wherein the central area of each lens has a spherical surface, and the annular area of each lens has an aspherical surface.

16. The use of claim 14 or claim 15, wherein each lens of the pair comprises only one annular area providing the intermediate optical power and near optical power.

17. The use of any one of claims 14 to 16, wherein the central area includes an add power from about + 0.25 diopters to about + 1.25 diopters.

18. A method of producing contact lenses for correcting vision of a person requiring vision correction of +1.25 diopters or less, comprising:
forming a pair of daily disposable multifocal contact lenses or a pair of silicone hydrogel multifocal contact lenses, each lens of the pair of multifocal contact lenses comprising a central area including the optic axis of the contact lens and providing substantially all of the distance optical power of the multifocal contact lens; and an annular area surrounding the central area and extending radially outwardly from the central area toward a lens edge of the multifocal contact lens, the annular area providing intermediate optical power and near optical power.

19. The method of claim 18, wherein the central area of each lens has a spherical surface, and the annular area of each lens has an aspherical surface.

20. The method of claim 18 or 19, wherein each lens of the pair comprises only one annular area providing the intermediate optical power and near optical power.

21. The method of any one of claims 18 to 20, wherein the central area includes an add power from about + 0.25 diopters to about + 1.25 diopters.

22. The method of any one of claims 18 to 21, wherein the forming comprises cast molding each lens of the pair.
